# EUROPÄISCHE PATENTSCHRIFT

(11) **EP 1 286 760 B1**
(45) Veröffentlichungstag und Bekanntmachung des Hinweises auf die Patenterteilung: **05.10.2011**
(21) Anmeldenummer: 01931660.3
(22) Anmeldetag: 27.04.2001
(51) Int. Cl.: B01J 19/00, B01L 3/00

(54) **VORRICHTUNG FÜR DIE PARALLELE MIKROSYNTHESE**
DEVICE USED IN PARALLEL MICROSYNTHESIS
DISPOSITIF POUR L'EXECUTION EN PARALLELE DE PLUSIEURS MICROSYNTHESES

(30) Priorität: 23.05.2000 DE 10025698
(43) Veröffentlichungstag der Anmeldung: 05.03.2003
(73) Patentinhaber: NANOMICS Technologies GmbH, 98693 Ilmenau (DE)
(72) Erfinder: DIEFENBACH, Beate, 81739 München (DE); DEPPE, Holger, 60388 Frankfurt (DE); WURZIGER, Hanns, 64291 Darmstadt (DE); GROSS, Alexander, 64382 Babenhausen (DE); SCHLINGLOFF, Gregor, 76297 Stutensee (DE); SCHOBER, Andreas, 64291 Darmstadt (DE); TOMANDL, Dirk, 69181 Leimen (DE)
(74) Vertreter: Riepe, Hans-Gerd
(86) Internationale Anmeldenummer: PCT/EP2001/004758
(87) Internationale Veröffentlichungsnummer: WO 2001/089680

(56) Entgegenhaltungen:
- EP-A- 0 299 741
- WO-A-98/22219
- DE-A- 19 843 655
- US-A- 5 604 130
- US-A- 5 604 130

## Beschreibung

Die Erfindung betrifft eine Vorrichtung zur parallelen Durchführung vieler Mikrosynthesen.

Sowohl im Rahmen von Forschungs- und Entwicklungstätigkeiten als auch bei der Durchführung von Routineanalysen steigt der Bedarf der chemischen, biologischen und pharmazeutischen Industrie hinsichtlich des Probendurchsatzes ständig. Um diesem Bedarf kostengünstig und effizient gerecht zu werden, wird versucht, immer mehr Verfahrensschritte für möglichst viele Proben gleichzeitig durchzuführen und das dafür notwendige, jeweilige Probenvolumen auf ein Minimum zu reduzieren.

Es ist mittlerweile Standard, mehrere kleinere Reaktionsbehälter matrixförmig angeordnet zu Reaktionseinheiten zu kombinieren. Die einzelnen Reaktionsbehälter, im einfachsten Fall ein Reagenzröhrchen, weisen ein typisches Fassungsvermögen im Bereich Milliliter bis in seltenen Fällen einigen Mikroliter auf. Diese Miniaturisierung erlaubt nicht nur eine immer stärkere Parallelisierung einzelner Verfahrensschritte, sie reduziert auch laufende Kosten für die Beschaffung bzw. Entsorgung der verwendeten chemischen Substanzen, biologischen Materialien und Lösungsmittel.

Ein ständig wachsender Probendurchsatz erfordert eine zunehmende Automatisierung möglichst vieler Verfahrensschritte. Ständig wiederkehrende Verfahrensschritte, wie beispielsweise das Befüllen oder Entleeren einzelner Reaktionsbehälter, werden üblicherweise heute schon automatisiert durchgeführt. Werden viele einzelne Reaktionsbehälter zu einer Reaktionseinheit kombiniert, so muss nicht nur ein möglichst einfacher Zugriff auf jeden einzelnen Reaktionsbehälter gewährleistet sein, sondern auch die Formgebung der gesamten Reaktionseinheit eine automatisierte Handhabung während des Verfahrens ermöglichen.

Je geringer die Menge der verwendeten chemischen Substanzen und Lösungsmittel gewählt wird, umso störender wird der Einfluss möglicherweise auftretender Verdunstungseffekte. Ein dichtes Verschließen der einzelnen Reaktionsbehälter während einer Reaktion ist deshalb zwingend notwendig, um einerseits Verdunstungseffekte zu minimieren und andererseits das unkontrollierte Austreten von Reaktionslösungen während einer Reaktion zu verhindern.

Mit abnehmendem Reaktionsvolumen eines einzelnen Reaktionsbehälters steigt dabei der für einen dichten Verschluss notwendige konstruktive Aufwand. Für relativ große Reaktionsbehälter und entsprechende Mengen an Reaktionslösung ist eine leicht angedrückte Bedeckung der einzelnen Öffnungen ausreichend. Werden viele Reaktionsbehälter mit einem jeweiligen Fassungsvermögen im Bereich von Mikrolitern kombiniert, so werden die einzelnen Reaktionsbehälter durch einen mit Federkraft angedrückten Deckel selbst dann nicht ausreichend dicht verschlossen, wenn zwischen dem Deckel und den Öffnungen der einzelnen Reaktionsbehältern eine Dichtfolie eingefügt wird. Eine Kontamination benachbarter Reaktionsbehälter durch austretende Reaktionslösungen wird nur dadurch vermieden, dass sich zwischen den einzelnen Reaktionsbehältern ein ausreichender Zwischenraum befindet.

Noch stärker miniaturisierte Reaktionseinheiten bestehen aus einer Scheibe, in der eine große Anzahl einzelner Kavitäten matrixförmig angeordnet ist. Eine solche Mikrokammermatrix kann beispielsweise durch kontrollierte Ätzvorgänge aus einer Siliziumscheibe hergestellt werden. Das Fassungsvermögen der einzelnen als Mikrokammer bezeichneten Kavitäten kann deutlich weniger als ein Mikroliter betragen. Ein dichtes Verschließen der Mikrokammern ist mit bekannten Methoden nicht möglich. Auf Grund der geringen Dimensionen der einzelnen Mikrokammern treten extrem hohe Kapillarkräfte auf. Das Verdunsten, das unkontrollierte Austreten oder das Übersprechen geringster Mengen von Reaktionslösungen während einer Reaktion führt zwangsläufig zu falschen Ergebnissen einer später durchgeführten quantitativen Auswertung der Reaktion. Die bekannten Verschlussmechanismen reichen bei einer Mikrokammermatrix mit derart geringen Ausmaßen nicht aus.

Die Schrift DE 198 43 655 A1 offenbart eine als Reaktionskammer ausgebildete Vorrichtung zur Behandlung einer Substanz. Die Vorrichtung umfasst ein Gefäß mit einer Öffnung, welche durch eine Folie verschließbar ist. Ferner ist ein Substanzträger umfasst, der auf der in das Gefäßinnere weisenden Seite der Folie befestigt ist. Darüberhinaus wird eine Vorrichtung zur Zuführung einer Substanz-tragenden Folie offenbart, welche einen Folienträger mit Folienaufnehmern zum Aufnehmen der Folie, eine Substanzträger-Zuführeinrichtung und eine Verstelleinrichtung zum Verstellen besagter Substanzträger-Zuführeinrichtung relativ zum Folienträger umfasst.

Die Schrift EP-A-0 299 741 offenbart ein Verfahren und eine Vorrichtung für die sequenzierung von Peptiden oder Proteinen. Es handelt sich bei der Vorrichtung um eine Reaktionssäule, welche im kontinuierlichen Fluss betrieben wird. Die Reaktionssäule weist eine Reaktionskammer auf, welche mit porösem Trägermaterial gefüllt ist (stationäre Phase) und an den jeweiligen Enden einen Eingangs- bzw. Ausgangsschlauch aufweist. Als stationäre Phase wird bevorzugt Polybrene (Aldrich Chemical Company) verwendet. Es handelt sich bei der Reaktionssäule um ein offenes Reaktionssystem d.h. die Reaktionskammer der Säule ist zu keinem Zeitpunkt der Reaktion verschlossen.

Die Schrift WO 98 22219 A offenbart eine Mehrgefäßvorrichtung für Synthesen im Mikromaßstab, welche u.a. Einfüll- und Ausflusszotten umfasst, wobei zur Abdichtung der Vorrichtung Dichtfolien auf diese Zotten aufgepresst sind. Die Anordnung der Zotten ist dabei derart ausgestaltet, dass zwischen ihnen jeweils ein Graben ausgebildet ist, welcher nicht mit den Dichtfolien in Verbindung steht, so dass aus den Zotten austretende Flüssigkeiten nicht durch Kapillarkräfte / Undichtheiten in benachbarte Kammern gelangen können.

Die Schrift US-A-5 604 130 offenbart eine Vorrichtung, welche Mikrotiterplatten zur parallelen Durchführung von Reaktionen umfasst. Die Vorrichtung besitzt eine Rahmenkonstruktion mit einer Bodenplatte und seitlichen Erhebungen, wobei die seitlichen Erhebungen über die eingesetzte Mikrotiterplatte hinausragen. Ein Stempel umfassend eine Schicht aus elastischem Material sowie eine Dichtfolie ist passgenau innerhalb des von den seitlichen Erhebungen begrenzten Zwischenraums der Rahmenkonstruktion bewegbar. Die Vorrichtung erlaubt ein dichtes Verschließen von Mikrotiterplatten.

Aufgabe der Erfindung ist es demzufolge, eine Vorrichtung zur parallelen Durchführung vieler Mikrosynthesen in einer Mikrokammermatrix so zu gestalten, dass die einzelnen Mikrokammern der Mikrokammermatrix dicht verschließbar sind, wobei das Verschließen vor bzw. das Öffnen der Mikrokammern nach einer Reaktion automatisierbar ist, um eine wirtschaftliche und effiziente Durchführung des gesamten Verfahrens zu erlauben, so dass die Nachteile des Standes der Technik vermieden werden.

Die erfindungsgemäße Lösung dieser Aufgabe beruht auf einer Vorrichtung mit einer mindestens eine Mikrokammermatrix haltenden Rahmenkonstruktion, welche senkrecht zur Mikrokammermatrix in beiden Richtungen überstehende, die Mikrokammermatrix geschlossen umgebende Erhebungen aufweist, mit einer Bodenplatte und einer Deckplatte und mit an der Bodenplatte und der Deckplatte fest angebrachten Stempeln, die passgenau den von den Erhebungen der Rahmenkonstruktion begrenzten Zwischenraum ausfüllend bewegbar sind, wobei an der der Mikrokammermatrix zugewandten Stempelseite jeweils eine Schicht aus elastischem Material sowie eine Dichtfolie befestigt ist.

Ein sehr hoher Druck ist nötig, um trotz der extrem starken Kapillarkräfte ein dichtes Verschließen jeder einzelnen Mikrokammer zu gewährleisten. Auf Grund der geringen Schichtdicke der Mikrokammermatrix wäre es nahezu unmöglich, den Druck einer weitgehend inelastischen gemeinsamen Abdeckung gleichmäßig auf alle Mikrokammern zu verteilen. Geringste Lageabweichungen von entweder der Mikrokammermatrix oder den Stempeln führen zu einem mehr oder weniger starken Druckgradienten, der schlimmstenfalls zur Zerstörung der relativ zerbrechlichen Mikrokammermatrix führen kann. Ohne großen konstruktiven Aufwand wird dieses Problem durch das Einfügen einer vorzugsweise dünnen Schicht aus elastischem Material zwischen dem Stempel und der Dichtfolie gelöst. Die dünne Schicht aus elastischem Material gleicht ein nicht planparalleles Andrücken des Stempels auf die Mikrokammermatrix durch eine entsprechende Verformung aus, so dass die Dichtfolie gleichmäßig auf jede Mikrokammer gedrückt wird.

Bei einem für das dichte Verschließen aller Mikrokammern notwendigen Druck würde die dünne Schicht aus elastischem Material zumindest teilweise seitlich austreten. Ein ausreichend hoher, gleichmäßiger Druck der Dichtfolie auf die Mikrokammern wäre dann nicht mehr gewährleistet. Es besteht zudem die Gefahr, dass durch Druck auf den Stempel die dünne Schicht aus elastischem Material zumindest bereichsweise völlig verdrängt wird, so dass der inelastische Stempel direkt auf die Dichtfolie bzw. die Mikrokammermatrix drückt. Indem die Mikrokammermatrix von einer Rahmenkonstruktion gehalten wird, die in beiden Richtungen überstehende, die Mikrokammermatrix geschlossen umgebende Erhebungen aufweist, wird ein seitliches Austreten der unter Druck stehenden dünnen Schicht aus elastischem Material durch die den Stempel passgenau umgebenden Erhebungen verhindert. Das Verschließen bzw. Öffnen der Mikrokammern wird durch beiderseitigen Druck bzw. Druckentlastung von Bodenplatte und Deckplatte erreicht. Darüber hinaus sind keine möglicherweise komplexen Verschlussmechanismen notwendig, so dass eine Automatisierung dieser Vorgänge mit einfachsten Mitteln umgesetzt werden kann.

Vorzugsweise ist vorgesehen, dass mehrere Mikrokammermatrizen gleichzeitig von der Rahmenkonstruktion gehalten werden und eine entsprechende Anzahl zugeordneter Stempel an der Bodenplatte und der Deckplatte befestigt ist. Selbst bei einer großen Anzahl von Mikrokammern weist die Mikrokammermatrix nur äußerst geringe Abmaße auf, so dass die gleichzeitige Verwendung mehrerer Mikrokammermatrizen möglich und ökonomisch sinnvoll ist. Eine einzelne Mikrokammermatrix kann aus fertigungstechnischen Überlegungen nicht beliebig groß hergestellt werden. Mehrere kleine Stempel, die passgenau von den Erhebungen der Rahmenkonstruktion umgeben sind, sind auch hinsichtlich des kontrollierten Ausübens eines gleichmäßigen Drucks auf alle einzelnen Mikrokammern vorteilhaft.

Gemäß einer vorteilhaften Ausgestaltung des Erfindungsgedankens ist vorgesehen, dass bei jedem Stempel zwischen der Schicht aus elastischem Material und der Dichtfolie eine Dampfsperre angebracht ist. Die auf die Öffnungen der Mikrokammern gepresste Dichtfolie verhindert bei ausreichendem Druck wirkungsvoll das Austreten von Flüssigkeiten aus der Mikrokammer. Die üblicherweise als Dichtfolie verwendeten Materialien verhindern jedoch nicht vollständig das Austreten bzw. die langsame Diffusion gasförmiger Reaktionslösungsdämpfe. Eventuell austretende Dämpfe der Reaktionslösungen können die Eigenschaften der Schicht aus elastischem Material, insbesondere die Elastizität dieser Schicht negativ beeinflussen, was durch eine zusätzlich angebrachte Dampfsperre verhindert wird. Diese Dampfsperre kann selbst wieder aus einer dünnen Schicht oder einer Folie bestehen.

Einer Ausgestaltung des Erfindungsgedankens zufolge ist vorgesehen, dass die Bodenplatte und/oder die Deckplatte Vorrichtungen zur Temperaturregelung aufweisen. In vielen Fällen wird durch eine erhöhte Temperatur während des Reaktionsablaufs eine schnellere oder effizientere Umsetzung der beteiligten chemischen Substanzen erreicht. Über die Bodenplatte bzw. die Deckplatte kann für die gesamte Vorrichtung einschließlich der Mikrokammermatrix eine von der Umgebungstemperatur abweichende Temperatur eingestellt werden. Auf Grund der leicht zugänglichen und ausreichend großen Bodenplatte bzw. Deckplatte ist eine konstruktiv einfache Umsetzung der Temperaturregelung möglich.

Einer vorteilhaften Ausführung des Erfindungsgedankens zufolge ist vorgesehen, dass ein oder mehrere Stempel Vorrichtungen zur Temperaturregelung aufweisen. Gerade bei sehr temperaturabhängigen Verfahrensschritten kann eine direktere Temperaturregelung der Mikrokammern wünschenswert sein. Im zusammengedrückten Zustand liegen die Stempel flächig auf der Mikrokammermatrix auf, so dass eine präzise Temperaturregelung vorgenommen werden kann.

Weitere vorteilhafte Ausgestaltungen des Erfindungsgedankens sind Gegenstand weiterer Unteransprüche.

Nachfolgend werden Ausführungsbeispiele der Erfindung näher erläutert, die in der Zeichnung dargestellt sind. Es zeigt:
- Fig. 1: einen Schnitt durch mehrere von einer Rahmenkonstruktion gehaltenen Mikrokammermatrizen mit auseinander gezogenen Stempeln,
- Fig. 2: einen Schnitt durch das in Fig. 1 gezeigte Ausführungsbeispiel mit zusammengepressten Stempeln und
- Fig. 3: einen vergrößerten Ausschnitt aus Fig. 2.

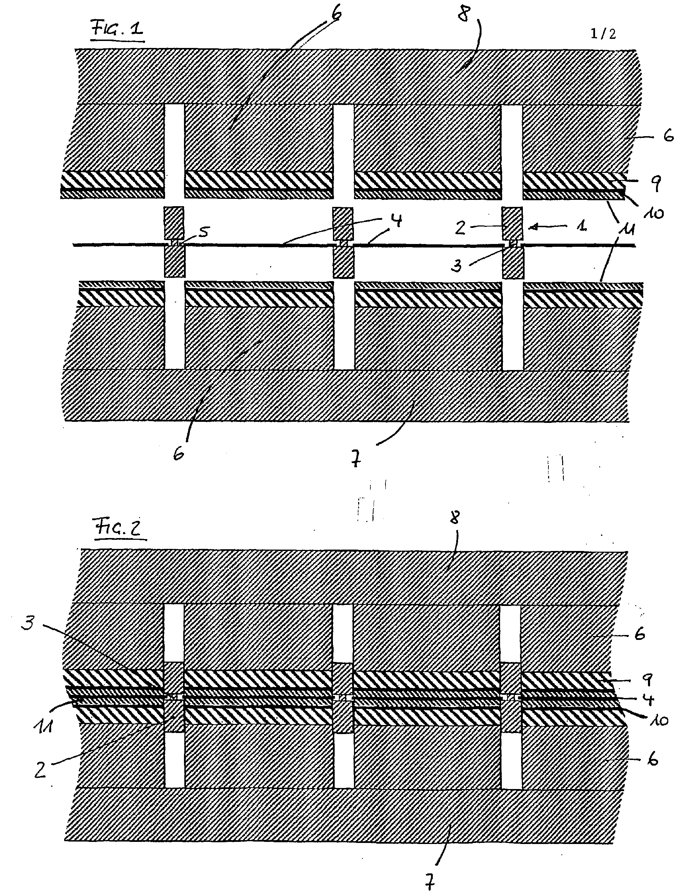

Die in Fig. 1 im geöffneten Zustand dargestellte Vorrichtung weist eine Rahmenkonstruktion 1 mit mehreren wandartigen Erhebungen 2 auf, die an beiden Seiten senkrecht zur Ebene der Rahmenkonstruktion 1 überstehen. Jeweils zwei unmittelbar gegenüberliegende, wandartige Erhebungen 2 sind über eine Einschnürung 3 miteinander verbunden. Je eine Mikrokammermatrix 4 liegt auf einer von mehreren benachbarten, über Einschnürungen 3 verbundenen Erhebungen 2 gebildeten umlaufenden Auflagefläche 5 auf. Die einzelnen Mikrokammermatrizen 4 liegen dabei lose, in allen Richtungen etwas beweglich auf. Oberhalb und unterhalb jeder Mikrokammermatrix 4 befindet sich ein Stempel 6, der jeweils an einer allen Stempeln 6 gemeinsamen Bodenplatte 7 und Deckplatte 8 befestigt ist. An jedem Stempel 6 ist auf der der Mikrokammermatrix 4 zugewandten Seite eine dünne Schicht aus elastischem Material 9, eine als Folie ausgeführte Dampfsperre 10 sowie eine Dichtfolie 11 angebracht. Der jeweilige Abstand der einzelnen Stempel 6 untereinander ist so gewählt, dass jeder Stempel 6 passgenau den von den Erhebungen 2 der Rahmenkonstruktion 1 begrenzten Zwischenraum ausfüllt.

Fig. 2 zeigt einen Schnitt durch die Vorrichtung, wenn durch beiderseitigen Druck auf die Bodenplatte 7 bzw. die Deckplatte 8 die Öffnungen aller Mikrokammermatrizen 4 dicht verschlossen sind. Je ein Stempel 6 drückt dabei die Dichtfolie 11 von oben bzw. unten flächig auf die Öffnungen der Mikrokammermatrix 4. Durch die dünne Schicht aus elastischem Material 9 wird sichergestellt, dass auch bei nicht exakt paralleler Ausrichtung der Mikrokammermatrix 4 zu den Stempeln 6 bzw. der Stempel 6 untereinander ein gleichmäßiger Anpressdruck der Dichtfolie 11 auf alle Mikrokammern der Mikrokammermatrix 4 gewährleistet ist.

Durch das lose und leicht bewegliche Aufliegen der Mikrokammermatrix 4 auf der umlaufenden Auflagefläche 5 ist in dem durch die Abmessungen der Einschnürung 3 vorgegebenen Bereich ein Ausgleichen eines evtl. unterschiedlichen Anpressdrucks der beiden Stempel 6 durch eine Lageveränderung der Mikrokammermatrix 4 möglich.

Die sich unter Druck verformende dünne Schicht aus elastischem Material 9 wird durch die den Stempel 6 passgenau umgebenden Erhebungen 2 an einem seitlichen Herausquellen gehindert. Eine dauerhafte Verformung der am Stempel 6 angebrachten dünnen Schichten oder Folien, insbesondere der dünnen Schicht aus elastischem Material 9, wird durch die den Stempel 6 geschlossen umgebenden Erhebungen 2 innerhalb eines großen Druckbereichs verhindert, so dass die beschriebene Vorrichtung über viele Verfahrenszyklen hinweg unverändert verwendet werden kann.

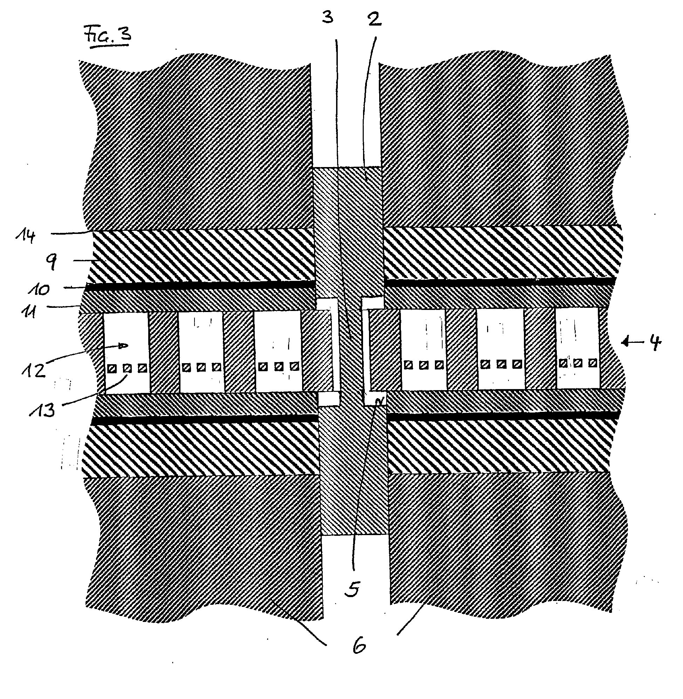

In dem in Fig. 3 vergrößert dargestellten Ausschnitt aus Fig. 2 wird eine spezielle Ausführungsform der Mikrokammermatrix 4 schematisch dargestellt. Jede Mikrokammer 12 ist dabei als ein durchgehendes Loch in der Mikrokammermatrix 4 ausgeführt und weist einen Siebboden 13 auf. Die Dichtfolie 11 wird durch den zugeordneten Stempel 6 auf die Oberfläche der Mikrokammermatrix 4 gepresst und verschließt dadurch die Mikrokammern 12.

Je nach Anwendung kann zwischen jedem Stempel 6 und der daran befestigten dünnen Schicht aus elastischem Material 9 eine dünne Metallfolie 14 angeordnet sein.

Die Bodenplatte 7 und die Deckplatte 8 können durch nicht dargestellte Schraubvorrichtungen fest verbindbar sein. Dadurch kann vor allem während lang andauernder Reaktionsabläufe ein konstanter Druck der Stempel 6 auf die Mikrokammermatrizen 4 ohne großen konstruktiven Aufwand erreicht werden.

## Patentansprüche

1. Vorrichtung zur parallelen Durchführung vieler Mikrosynthesen mit einer mindestens eine Mikrokammermatrix (4) haltenden Rahmenkonstruktion (1), welche senkrecht zur Mikrokammermatrix (4) in beiden Richtungen überstehende, die Mikrokammermatrix (4) geschlossen umgebende Erhebungen (2) aufweist, mit einer Bodenplatte (7) und einer Deckplatte (8) und mit an der Bodenplatte (7) und der Deckplatte (8) fest angebrachten Stempeln (6), die passgenau den von den Erhebungen (2) der Rahmenkonstruktion (1) begrenzten Zwischenraum ausfüllend bewegbar sind, wobei an der der Mikrokammermatrix (4) zugewandten Stempelseite jeweils eine Schicht aus elastischem Material (9) sowie eine Dichtfolie (11) befestigt ist.

2. Vorrichtung nach Anspruch 1, **dadurch gekennzeichnet, dass** mehrere Mikrokammermatrizen (4) gleichzeitig von der Rahmenkonstruktion (1) gehalten sind und eine entsprechende Anzahl zugeordneter Stempel (6) an der Bodenplatte (7) und der Deckplatte (8) befestigt ist.

3. Vorrichtung nach Anspruch 1, **dadurch gekennzeichnet, dass** bei jedem Stempel (6) zwischen der Schicht aus elastischem Material (9) und der Dichtfolie (11) eine Dampfsperre (10) angebracht ist.

4. Vorrichtung nach Anspruch 1, **dadurch gekennzeichnet, dass** zwischen jedem Stempel (6) und der daran befestigten Schicht aus elastischem Material (9) eine Metallfolie (14) angeordnet ist.

5. Vorrichtung nach Anspruch 1, **dadurch gekennzeichnet, dass** die Bodenplatte (7) und/oder die Deckplatte (8) Vorrichtungen zur Temperaturregelung aufweisen.

6. Vorrichtung nach Anspruch 1, **dadurch gekennzeichnet, dass** ein oder mehrere Stempel (6) Vorrichtungen zur Temperaturregelung aufweisen.

7. Vorrichtung nach Anspruch 1, **dadurch gekennzeichnet, dass** die Bodenplatte (7) und die Deckplatte (8) durch Schraubvorrichtungen fest verbindbar sind.

## Claims

1. A device for conducting a large number of microsyntheses in parallel, having a frame structure (1) which holds at least one microchamber matrix (4) and has elevated regions (2) which project perpendicular to the microchamber matrix (4) in both directions and surround the microchamber matrix (4) such that it is closed, having a base plate (7) and a cover plate (8) and having presses (6) which are fixedly mounted on the base plate (7) and the cover plate (8) and which are movable in a precisely fitting manner such that they fill the intermediate space delimited by the elevated regions (2) of the frame structure (1), in which a layer of resilient material (9) and a sealing film (11) are in each case secured to the side of the press facing the microchamber matrix (4).

2. A device according to Claim 1, **characterised in that** a plurality of microchamber matrices (4) are held by the frame structure (1) at the same time and a corresponding number of associated presses (6) are secured to the base plate (7) and the cover plate (8).

3. A device according to Claim 1, **characterised in that** a vapour barrier (10) is mounted between the layer of resilient material (9) and the sealing film (11), on each press (6).

4. A device according to Claim 1, **characterised in that** a metal film (14) is arranged between each press (6) and the film of resilient material (9) secured thereto.

5. A device according to Claim 1, **characterised in that** the base plate (7) and/or the cover plate (8) has or have devices for regulating temperature.

6. A device according to Claim 1, **characterised in that** one or more presses (6) include devices for regulating temperature.

7. A device according to Claim 1, **characterised in that** the base plate (7) and the cover plate (8) are fixedly connectable by screwing devices.

## Revendications

1. Dispositif pour l'exécution en parallèle de plusieurs microsynthèses, comprenant une structure de châssis (1) maintenant au moins une matrice de microchambre (4), qui présente des surélévations (2) dépassant perpendiculairement de la matrice de microchambres (4) selon deux directions et entourant de manière fermée la matrice de microchambre (4), une plaque de fond (7) et une plaque de recouvrement (8) et des poinçons (6) appliqués fixes sur la plaque de fond (7) et la plaque de recouvrement (8), et qui peuvent être déplacés en remplissant en ajustement serré l'espace intermédiaire délimité par les surélévations (2) de la structure de châssis (1), dans lequel une couche de matériau élastique (9) et un film d'étanchéité (11) sont fixés respectivement sur le côté du poinçon tourné vers la matrice de microchambre (4).

2. Dispositif selon la revendication 1, **caractérisé en ce que** plusieurs matrices de microchambres (4) sont maintenues simultanément par la structure de châssis (1) et **en ce qu'**un nombre correspondant de poinçons affectés (6) est fixé à la plaque de fond (7) et à la plaque de recouvrement (8).

3. Dispositif selon la revendication 1, **caractérisé en ce que**, au niveau de chaque poinçon (6) entre la couche de matériau élastique (9) et le film d'étanchéité (11) est disposée une barrière pare-vapeur (10).

4. Dispositif selon la revendication 1, **caractérisé en ce qu'**entre chaque poinçon (6) et la couche de matériau élastique (9) qui y est fixée, est disposé un film de métal (14).

5. Dispositif selon la revendication 1, **caractérisé en ce que** la plaque de fond (7) et/ou la plaque de recouvrement (8) présente(nt) des dispositifs de régulation de la température.

6. Dispositif selon la revendication 1, **caractérisé en ce qu'**un ou plusieurs poinçons (6) comporte(nt) des dispositifs de régulation de la température.

7. Dispositif selon la revendication 1, **caractérisé en ce que** la plaque de fond (7) et la plaque de recouvrement (8) sont reliées de manière fixe par des dispositifs à vis.
